# EUROPEAN PATENT APPLICATION

(11) **EP 1 961 542 A1**
(43) Date of publication of application: **27.08.2008**
(21) Application number: 06834279.9
(22) Date of filing: 08.12.2006
(51) Int. Cl.: B29C 33/14

(54) **INJECTION MOLDING SIMULTANEOUS DECORATION METAL MOLD**

(30) Priority: 09.12.2005 JP 2005356932
(71) Applicant: NISSHA PRINTING CO., LTD., Nakagyo-ku Kyoto-shi Kyoto 604-8551 (JP)
(72) Inventor: UEHARA, Masashi, Kyoto-shi, Kyoto 604-8551 (JP)
(74) Representative: HOFFMANN EITLE
(86) International application number: PCT/JP2006/324524
(87) International publication number: WO 2007/066750

(57) **Abstract**

A metal mold for simultaneous injection-molding and decorating is provided with a movable-side metal mold having a frame clamp (11) and an extrusion rod (31, 32), and a fixed-side metal mold, at least one portion of the frame clamp has an inclinable portion (14), and at least one of the frame clamp and the extrusion rod has an inclinable mechanism (21), so that when cleaning the metal mold, the inclinable portion can be inclined relative to the extrusion rod.

## Description

### Technical Field

The present invention relates to a metal mold for simultaneous injection-molding and decorating, for efficiently carrying out removal of deposits on a cavity face of the metal mold.

### Background Art

Conventionally, with respect to the method of decorating the surface of a resin molded product, a simultaneous injection-molding and decorating method utilizing e.g., a transfer film has been in use. In carrying out this technique, a frame-shaped guide clamp member (hereinafter referred to as frame clamp) is mainly used to fix the transfer film on a metal mold (see patent document 1). The reason that the frame clamp is used is because, in comparison with a rod-shaped guide clamp member disclosed in patent document 2, it is possible to improve the level of preventing positional deviations of the transfer film and also to improve the follow-up property of the decorating film exerted onto the cavity face through vacuum suction, so that it becomes possible to improve the non-defective product rate of manufactured products.
Patent Document 1: Japanese Unexamined Patent Publication No. 2000-108158
Patent Document 2: Japanese Unexamined Patent Publication No. 61-3718

### Disclosure Of Invention

### Subject to be solved by the Invention

However, the use of the conventional frame clamp causes an issue of degradation in working efficiency such that, in comparison with the use of a rod clamp, a troublesome process is required for removing dents caused by molding. The dents mean a defective product phenomenon in which, when a resin molding process is carried out with deposits such as fine dusts or waste threads present on the cavity face of the metal mold to form a product appearance surface shape, the shapes of the deposits appear on the external surface of the resin-molded product. This issue will be discussed in the following description.

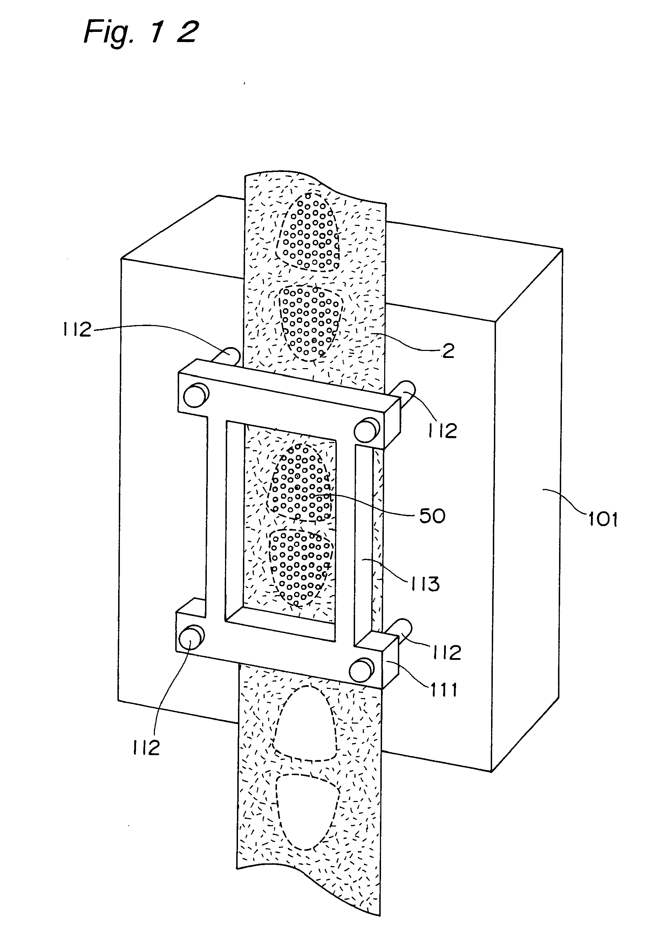

Fig. 12 is a schematic view that shows a state in which a transfer film 2 is placed between a frame clamp 111 and a metal mold 101 in a conventional metal mold.

A pattern 50, formed on the transfer film 2 to be transferred onto the surface of a resin molded product, is placed so as to be positioned on the face on the front side in Fig. 12. The pattern 50 viewed within the range surrounded by the frame clamp 111 is positioned so as to be adapted to the position of the metal mold cavity face that forms a product appearance surface shape. After the positioning of the transfer film 2, as the extrusion rods 112 are withdrawn into the metal mold 101, the transfer film 2 is fixed onto the metal mold 101 by the frame clamp 111 in such a manner as to cover the periphery of the metal mold cavity face. After the transfer film 2 has come into contact with the cavity face through a vacuum suction process, the metal mold 101 is closed, and a molten resin is injected into the metal mold 101, so that a simultaneously injection-molded and decorated product is formed. When taking the simultaneously injection-molded and decorated product out of the opened metal mold 101, as the extrusion rods 112 are extruded from the metal mold 101, the frame clamp 111 is separated from the metal mold cavity face so that the transfer film 2 is released from the metal mold 101. By transporting the transfer film 2 toward the lower side of Fig. 12, the portion of the transfer film 2 from which the pattern 50 has been peeled off is shifted downward from the position of the metal mold cavity face, and the next pattern 50 is placed at the position of the metal mold cavity face.

While the transfer film 2 is being shifted, fine dusts, waste threads, or the like scattering around the molding machine sometimes enter into the gap between the transfer film 2 and the metal mold 101. If these fine dusts, waste threads, or the like adheres to the metal mold cavity face, the shapes of these deposits are likely to appear on the product external face via the transfer film 2 when carrying out the next molding process. This product defective phenomenon is referred to as dents.

In the case where the above-mentioned conventional frame clamp 111 is used, even through an attempt is made to raise the end of the transfer film 2 high enough to directly view the metal mold cavity face and to remove the deposits on the metal mold cavity face, it is difficult to raise the end of the transfer film 2 high because of longitudinal frame members 113 of the frame clamp 111. Even though an attempt is made to remove the deposits by inserting a hand between the transfer film 2 and the metal mold cavity face with the end of the transfer film 2 slightly raised, it is difficult to carry out the removing operation, since the gap between the longitudinal frame members 113 of the frame clamp 111 and the metal mold 101 is narrow. Consequently, in order to remove the deposits, there is no other choice than to cut the transfer film 2 or to disassemble the frame clamp 111 from the metal mold 101 by removing screws that secure the frame clamp 111 and the extrusion rods 112 to each other with a wrench or a spanner. Both of these methods take a long time until the molding process can be resumed, resulting in an interruption in mass production.

An object of the present invention is to provide a metal mold for simultaneous injection-molding and decorating, which is provided with a frame clamp that does not cause any obstruction in removing deposits on the metal mold cavity face.

### Means for solving the Subject

In order to achieve the above-mentioned object, the present invention is provided with the following arrangements.

According to a first aspect of the present invention, there is provided a metal mold for simultaneous injection-molding and decorating, comprising:
a movable-side metal mold and a fixed-side metal mold, wherein
at least one metal mold of the movable-side metal mold and the fixed-side metal mold comprises:
   a frame clamp capable of sandwiching a transfer film between a metal mold cavity face and the frame clamp;
   an extrusion rod capable of shifting the frame clamp between a transfer film fixing position at which the frame clamp comes close to the metal mold cavity face to sandwich the transfer film between the frame clamp and the metal mold cavity face and a transfer film releasing position at which the frame clamp departs from the metal mold cavity face to release the transfer film;
   an inclinable portion that is arranged at least one portion of the frame clamp, capable of inclining relative to the extrusion rod; and
   an inclinable mechanism for coupling the inclinable portion of the frame clamp with the extrusion rod such that the inclinable portion can be inclined relative to the extrusion rod when molding is not performed.

According to a second aspect of the present invention, there is provided the metal mold for simultaneous injection-molding and decorating according to the first aspect, wherein the inclinable mechanism is a hinge portion.

According to a third aspect of the present invention, there is provided the metal mold for simultaneous injection-molding and decorating according to the first or second aspect, wherein when molding is performed, the inclinable mechanism is fixed such that the inclinable portion is made uninclinable relative to the extrusion rod.

According to a fourth aspect of the present invention, there is provided the metal mold for simultaneous injection-molding and decorating according to the first or second aspect, further comprising a fixing member for fixing the inclinable portion to at least one of the frame clamp and the extrusion rod so as not to incline relative to the extrusion rod,
wherein when molding is performed, the inclinable portion is fixed by the fixing member such that the inclinable portion does not incline relative to the extrusion rod.

According to a fifth aspect of the present invention, there is provided the metal mold for simultaneous injection-molding and decorating according to the third aspect, further comprising a fixing member for fixing the inclinable portion to at least one of the frame clamp and the extrusion rod so as not to incline relative to the extrusion rod,
wherein when molding is performed, the inclinable portion is fixed by the fixing member such that the inclinable portion does not incline relative to the extrusion rod.

According to a sixth aspect of the present invention, there is provided the metal mold for simultaneous injection-molding and decorating according to the fourth aspect, wherein a coupled portion between the inclinable portion and the extrusion rod is coupled by an engaging portion that is releasable from an engaged state, and the fixing member is a lock member for engaging with the engaging portion.

According to a seventh aspect of the present invention, there is provided the metal mold for simultaneous injection-molding and decorating according to the fifth aspect, wherein a coupled portion between the inclinable portion and the extrusion rod is coupled by an engaging portion that is releasable from an engaged state, and the fixing member is a lock member for engaging with the engaging portion.

According to an eighth aspect of the present invention, there is provided the metal mold for simultaneous injection-molding and decorating according to the first or second aspect, wherein the inclinable portion has a shape either of approximately an inverted U-shaped frame shape and approximately a rectangular frame shape.

According to a ninth aspect of the present invention, there is provided the metal mold for simultaneous injection-molding and decorating according to the third aspect, wherein the inclinable portion has a shape either of approximately an inverted U-shaped frame shape and approximately a rectangular frame shape.

According to a 10th aspect of the present invention, there is provided the metal mold for simultaneous injection-molding and decorating according to the fourth aspect, wherein the inclinable portion has a shape either of approximately an inverted U-shaped frame shape and approximately a rectangular frame shape.

According to an 11th aspect of the present invention, there is provided the metal mold for simultaneous injection-molding and decorating according to the fifth aspect, wherein the inclinable portion has a shape either of approximately an inverted U-shaped frame shape and approximately a rectangular frame shape.

According to a 12th aspect of the present invention, there is provided the metal mold for simultaneous injection-molding and decorating according to the sixth aspect, wherein the inclinable portion has a shape either of approximately an inverted U-shaped frame shape and approximately a rectangular frame shape.

According to a 13th aspect of the present invention, there is provided the metal mold for simultaneous injection-molding and decorating according to the seventh aspect, wherein the inclinable portion has a shape either of approximately an inverted U-shaped frame shape and approximately a rectangular frame shape.

### Effects of the Invention

In accordance with the first aspect of the present invention, in the metal mold for simultaneous injection-molding and decorating, at least one of the metal molds of the movable-side metal mold and the fixed-side metal mold is provided with the frame clamp and the extrusion rod, and the inclinable portion is arranged on at least one portion of the frame clamp, and the inclinable mechanism that allows the inclinable portion to incline relative to the extrusion rods during non-molding period is installed on at least one of the frame clamp and the extrusion rod; thus, during the non-molding period, that is, for example, at the time of cleaning the metal mold, the inclinable portion is allowed to incline relative to the extrusion rod.

Therefore, in the case of occurrence of dents on the molded product, the inclinable portion can be inclined relative to the extrusion rod so that the inclinable portion is brought apart from the metal mold cavity face; thus, when removing deposits on the metal mold cavity face, it is possible to shift the transfer film from the metal mold cavity face so as not to interfere with the removing process, and consequently to effectively remove the deposits on the metal mold cavity face.

In accordance with the second aspect of the present invention, the inclinable mechanism is a hinge portion.

Therefore, the inclinable mechanism is prepared by an easy process.

In accordance with the third aspect of the present invention, the inclinable mechanism is fixed during molding, so that the inclinable portion is fixed to be uninclinable relative to the extrusion rods.

Therefore, it is possible to save costs and time required for machining the fixing member.

In accordance with the fourth and fifth aspects of the present invention, the above-mentioned fixing member is further provided in at least one of the frame clamp and the extrusion rods.

Therefore, it is possible to sufficiently fix the inclinable portion.

In accordance with the sixth and seventh aspects of the present invention, the coupled portion between the inclinable portion and the extrusion rod is coupled by the engaging portion that is releasable from the engaged state, and the fixing member is the lock member such as a lock plate and a lock pin that conducts locking of the locking portion.

Therefore, it is possible to achieve the fixing of the inclinable portion by a simple machining process.

In accordance with the eighth to thirteenth aspects of the present invention, the shape of the inclinable portion is either an approximately inverted U-shaped frame shape or an approximately rectangular frame shape.

Therefore, it is possible to achieve air-tightness when the transfer film is made in tight-contact with the metal mold cavity face through vacuum suction.

### Brief Description of Drawings

These and other aspects and features of the present invention will become clear from the following description taken in conjunction with the preferred embodiments thereof with reference to the accompanying drawings, in which:
Fig. 1 is a perspective view that shows a frame clamp at the time of molding in a metal mold for simultaneous injection-molding and decorating in accordance with one embodiment of the present invention;
Fig. 2 is a partially enlarged perspective view that shows the frame clamp in the metal mold for simultaneous injection-molding and decorating in accordance with the embodiment of the present invention;
Fig. 3 is a perspective view that shows the frame clamp at the time of cleaning a metal mold cavity face in the metal mold for the simultaneous injection-molding and decorating in accordance with the embodiment of the present invention;
Fig. 4 is a partially enlarged perspective view that shows a frame clamp in accordance with another embodiment of the present invention;
Fig. 5 is a perspective view that shows the frame clamp at the time of cleaning the metal mold cavity face in accordance with the another embodiment of the present invention;
Fig. 6 is a perspective view that shows the frame clamp at the time of cleaning the metal mold cavity face in accordance with still another embodiment of the present invention;
Fig. 7 is a perspective view that shows a frame clamp at the time of molding in accordance with another embodiment of the present invention;
Fig. 8 is a partially enlarged perspective view that shows the frame clamp at the time of molding in accordance with the another embodiment of the present invention;
Fig. 9 is a partially enlarged perspective view that shows the frame clamp in accordance with the another embodiment of the present invention;
Fig. 10 is a partially enlarged perspective view that shows the frame clamp at the time of cleaning the metal mold cavity face in accordance with the another embodiment of the present invention;
Fig. 11 is a perspective view that shows a frame clamp at the time of cleaning a metal mold cavity face in accordance with still another embodiment of the present invention;
Fig. 12 is a schematic view that shows a state in which a transfer film is placed between a frame clamp and a metal mold in a conventional metal mold;
Fig. 13 is a cross-sectional view that shows a transfer film applicable to the metal mold for simultaneous injection-molding and decorating in accordance with the embodiment of the present invention;
Fig. 14 is an explanatory view of a process in which injection molding is carried out by using the metal mold for simultaneous injection-molding and decorating in accordance with the embodiment of the present invention;
Fig. 15 is an explanatory view of a process following the process of Fig. 14, in which injection molding is carried out by using the metal mold for simultaneous injection-molding and decorating in accordance with the embodiment of the present invention;
Fig. 16 is an explanatory view of a process following the process of Fig. 15, in which injection molding is carried out by using the metal mold for simultaneous injection-molding and decorating in accordance with the embodiment of the present invention;
Fig. 17 is an explanatory view of a process following the process of Fig. 16, in which injection molding is carried out by using the metal mold for simultaneous injection-molding and decorating in accordance with the embodiment of the present invention;
Fig. 18 is an explanatory view of a process following the process of Fig. 17, in which injection molding is carried out by using the metal mold for simultaneous injection-molding and decorating in accordance with the embodiment of the present invention;
Fig. 19A is a side view that shows a coupling portion between an extrusion rod and an inclinable portion at the time of molding in a metal mold in accordance with another embodiment of the present invention;
Fig. 19B is a side view that shows the coupling portion between the extrusion rod and the inclinable portion at the time of cleaning in the metal mold in accordance with the another embodiment of the present invention;
Fig. 20A is a side view that shows a coupling portion between an extrusion rod and an inclinable portion at the time of molding in a metal mold in accordance with still another embodiment of the present invention;
Fig. 20B is a side view that shows the coupling portion between the extrusion rod and the inclinable portion at the time of cleaning in the metal mold in accordance with the still another embodiment of the present invention;
Fig. 21A is a side view that shows a coupling portion between an extrusion rod and an inclinable portion at the time of molding in a metal mold in accordance with another embodiment of the present invention; and
Fig. 21B is a side view that shows the coupling portion between the extrusion rod and the inclinable portion at the time of cleaning in the metal mold in accordance with the another embodiment of the present invention.

### Best Mode for Carrying Out the Invention

Before the description of the present invention proceeds, it is to be noted that like parts are designated by like reference numerals throughout the accompanying drawings.

Referring to the attached drawings, preferred embodiments of the present invention will be discussed in the following description.

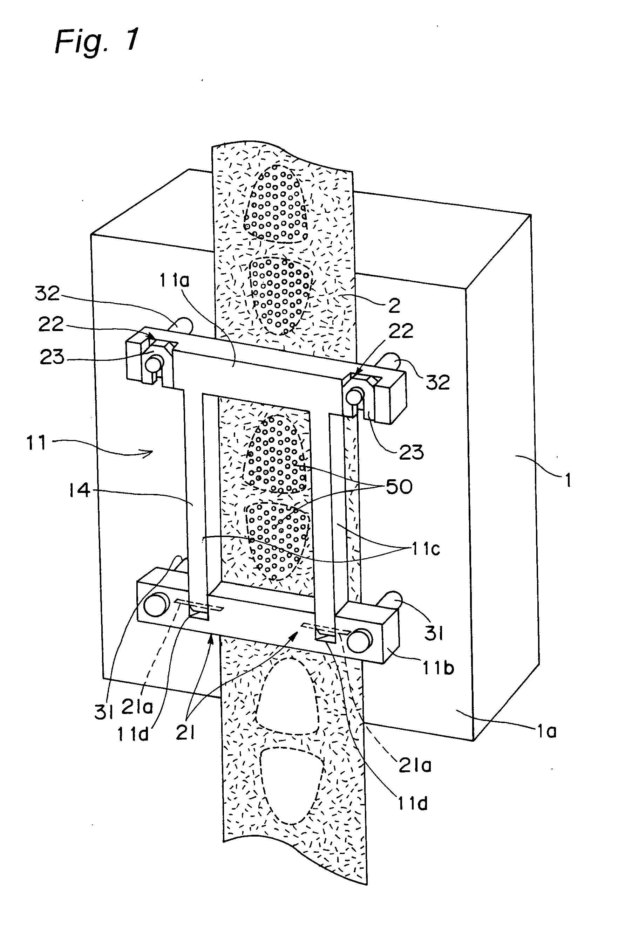

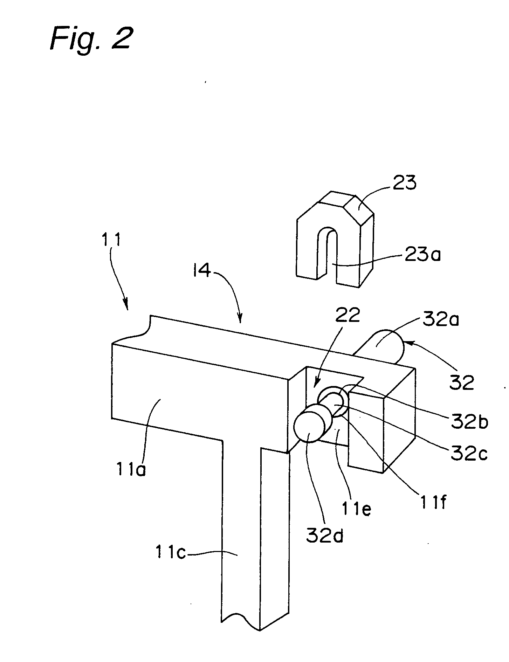

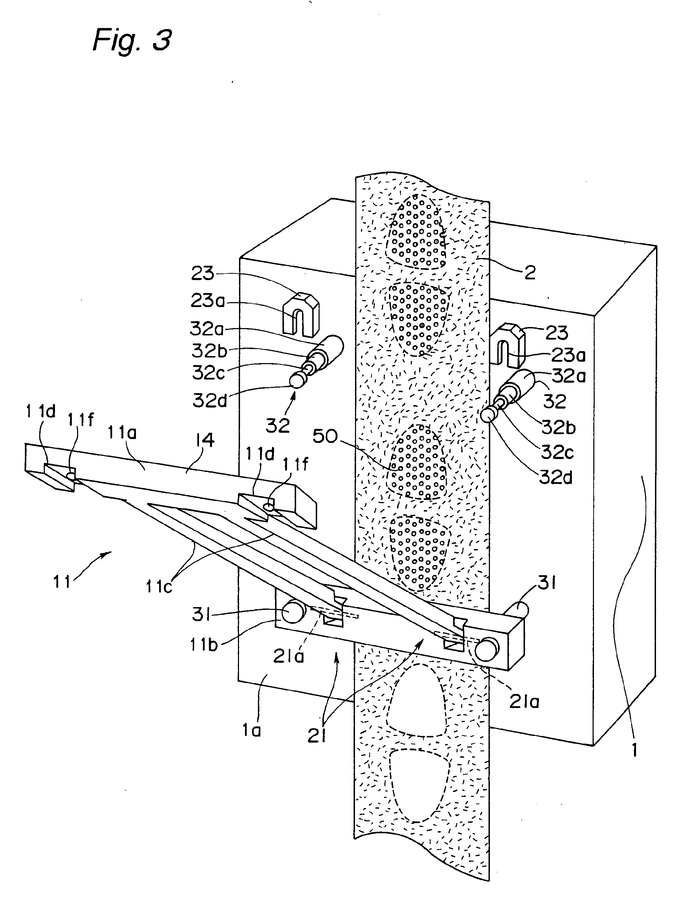

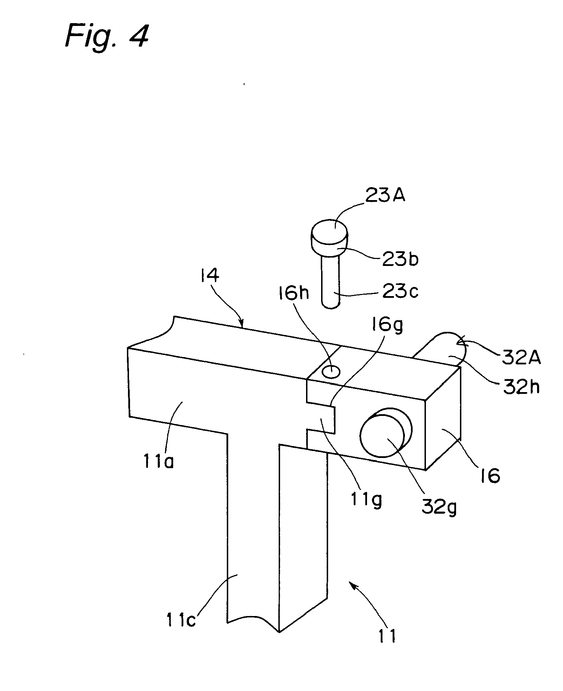

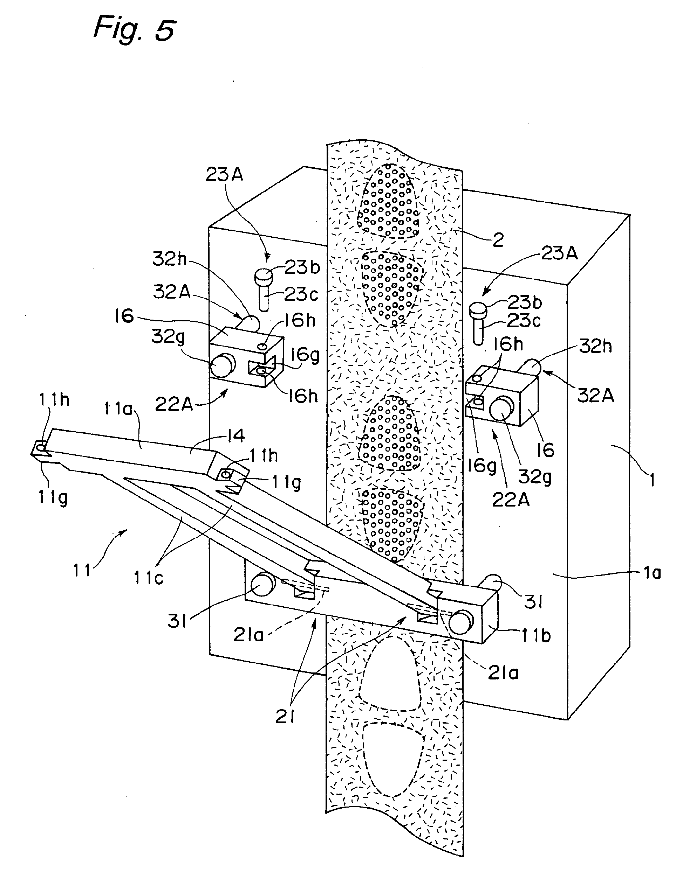

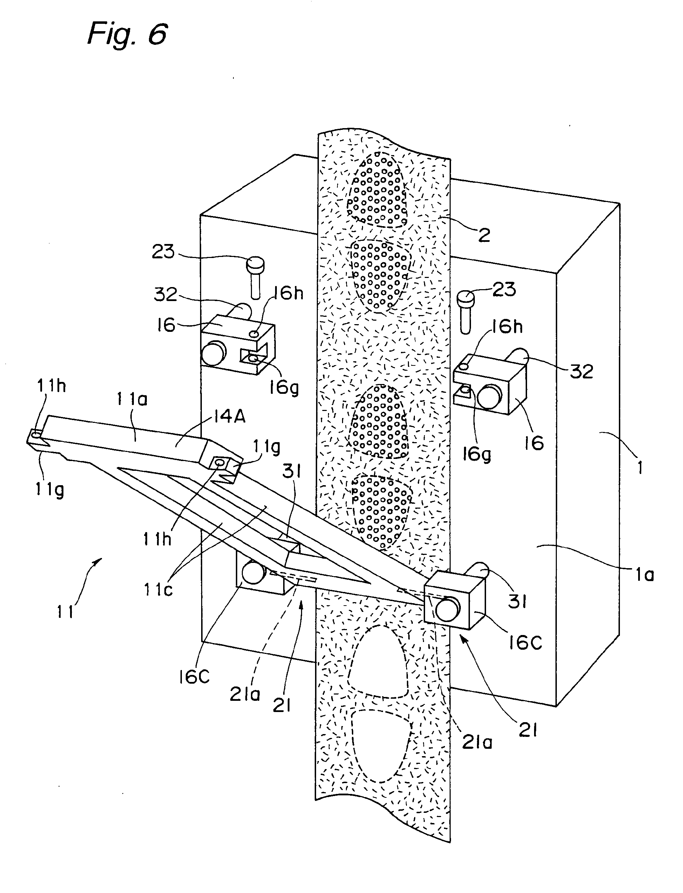

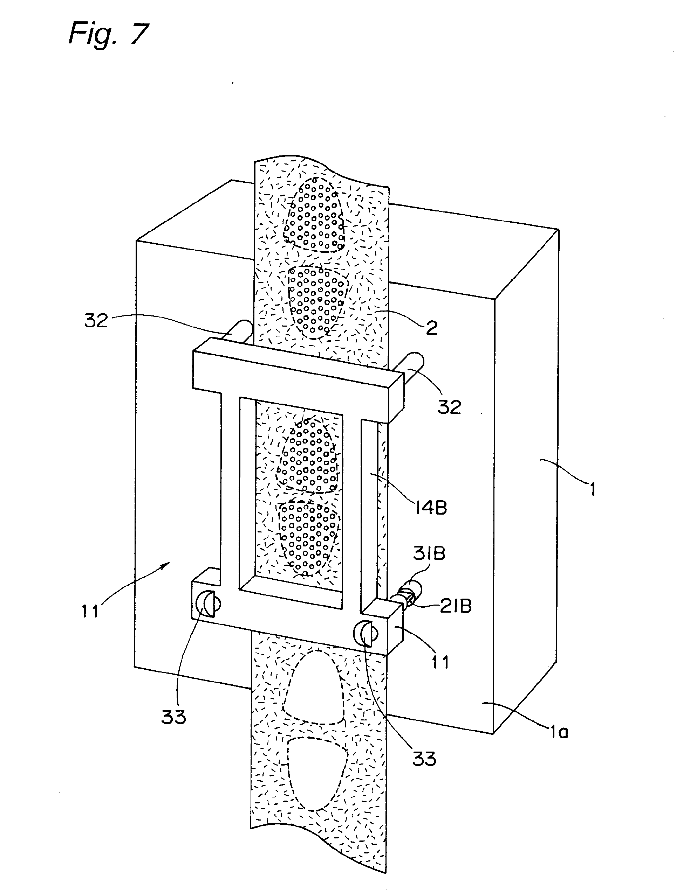

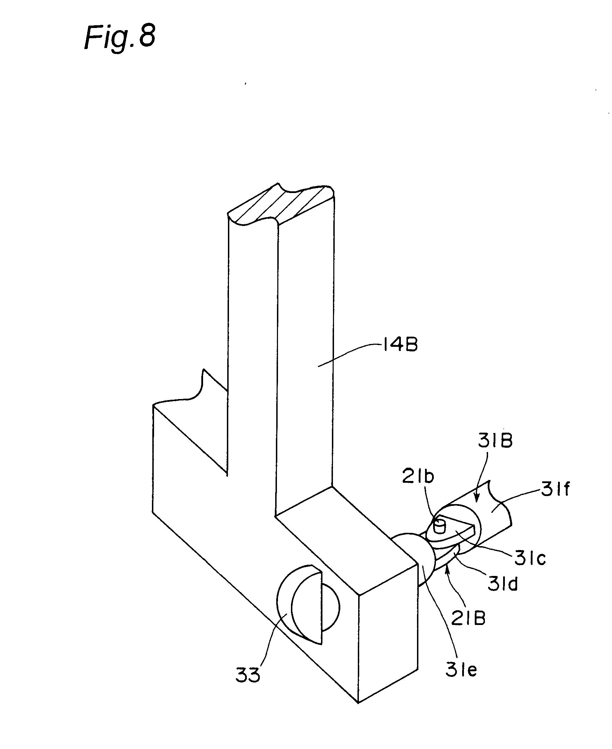

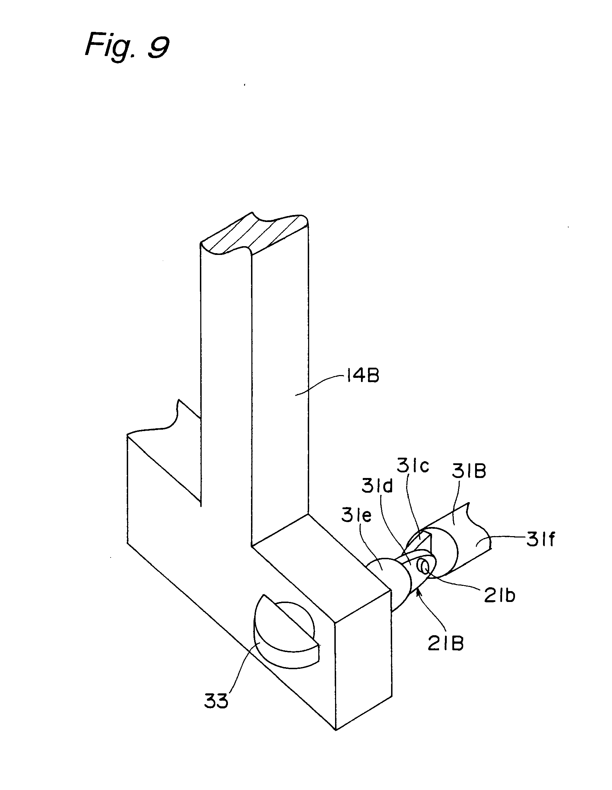

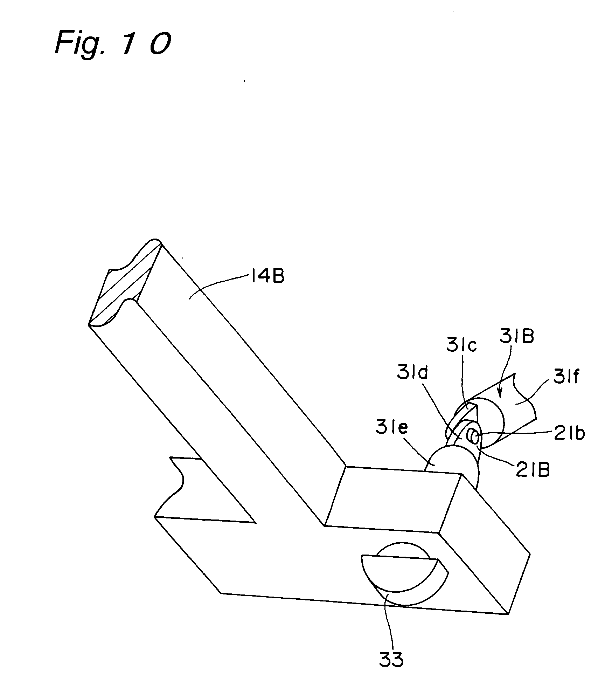

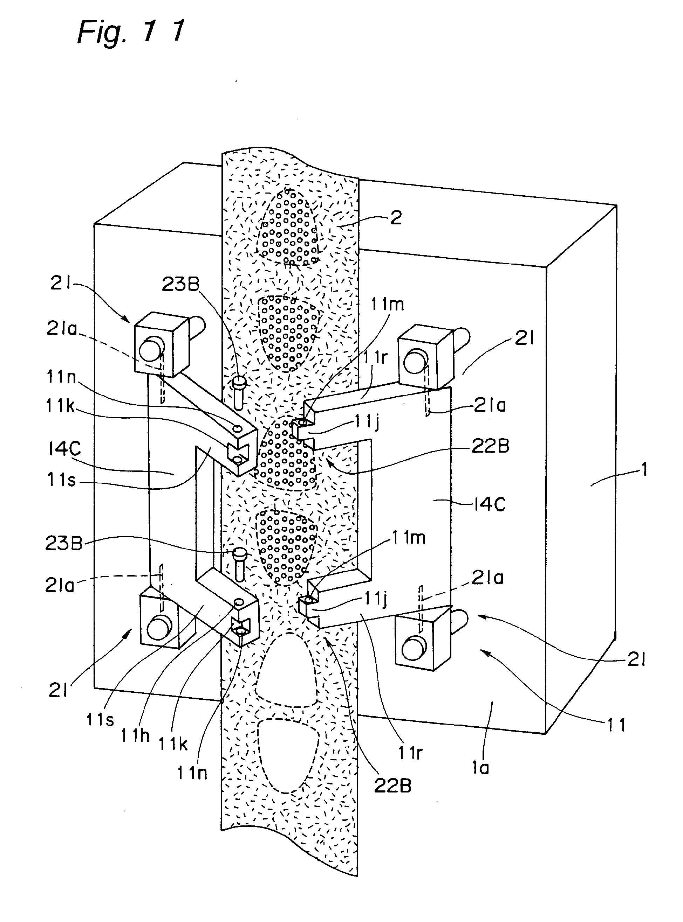

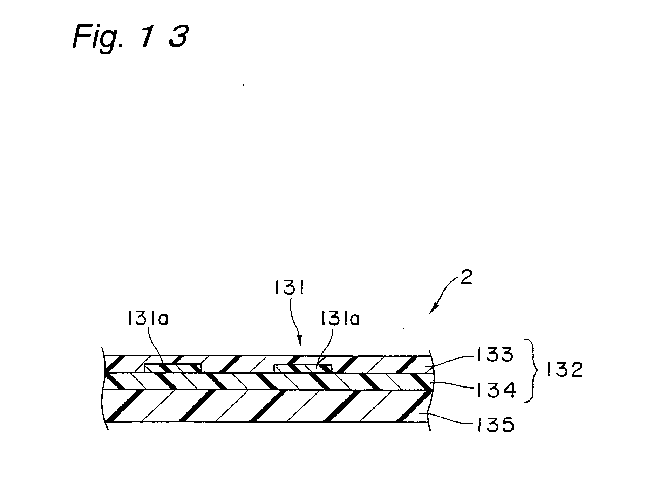

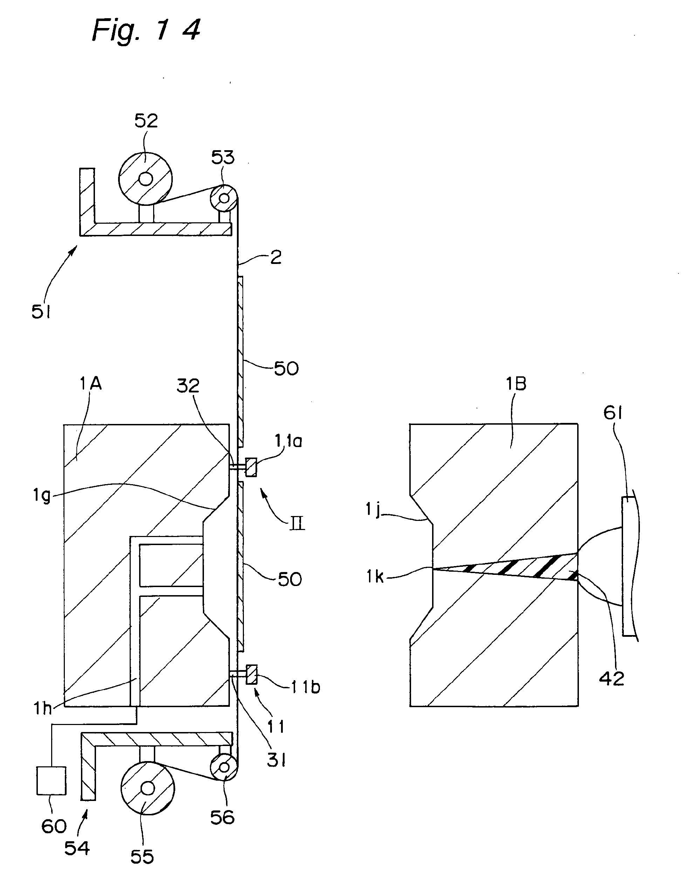

Fig. 1 is a perspective view that shows a frame clamp at the time of molding in a metal mold for simultaneous injection-molding and decorating in accordance with one embodiment of the present invention. Fig. 2 is a partially enlarged perspective view that shows the frame clamp in the metal mold for simultaneous injection-molding and decorating in accordance with the embodiment of the present invention. Fig. 3 is a perspective view that shows the frame clamp at the time of cleaning the metal mold cavity face of the metal mold for simultaneous injection-molding and decorating in accordance with the embodiment of the present invention. Fig. 4 is a partially enlarged perspective view that shows a frame clamp in accordance with another embodiment of the metal mold for simultaneous injection-molding and decorating in the above-mentioned embodiment of the present invention. Figs. 5 and 6 are perspective views that show the frame clamp at the time of cleaning the metal mold cavity face in accordance with the another embodiment of the metal mold for simultaneous injection-molding and decorating in the above-mentioned embodiment of the present invention. Fig. 7 is a perspective view that shows a frame clamp at the time of molding in accordance with another embodiment of the metal mold for simultaneous injection-molding and decorating in the above-mentioned embodiment of the present invention. Fig. 8 is a partially enlarged perspective view that shows the frame clamp at the time of molding in accordance with the another embodiment of the metal mold for simultaneous injection-molding and decorating in the above-mentioned embodiment of the present invention. Fig. 9 is a partially enlarged perspective view that shows the frame clamp in accordance with the another embodiment of the metal mold for simultaneous injection-molding and decorating in the above-mentioned embodiment of the present invention. Fig. 10 is a partially enlarged perspective view that shows the frame clamp at the time of cleaning the metal mold cavity face in accordance with the another embodiment of the metal mold for simultaneous injection-molding and decorating in the above-mentioned embodiment of the present invention. Fig. 11 is a perspective view that shows a frame clamp at the time of cleaning the metal mold cavity face in accordance with still another embodiment of the metal mold for simultaneous injection-molding and decorating in the above-mentioned embodiment of the present invention. Fig. 13 is a cross-sectional view that shows a transfer film applicable to the metal mold for simultaneous injection-molding and decorating in accordance with the embodiment of the present invention. Figs. 14 to 18 are explanatory views of processes in which injection molding is carried out by using the metal mold for simultaneous injection-molding and decorating in accordance with the embodiment of the present invention.

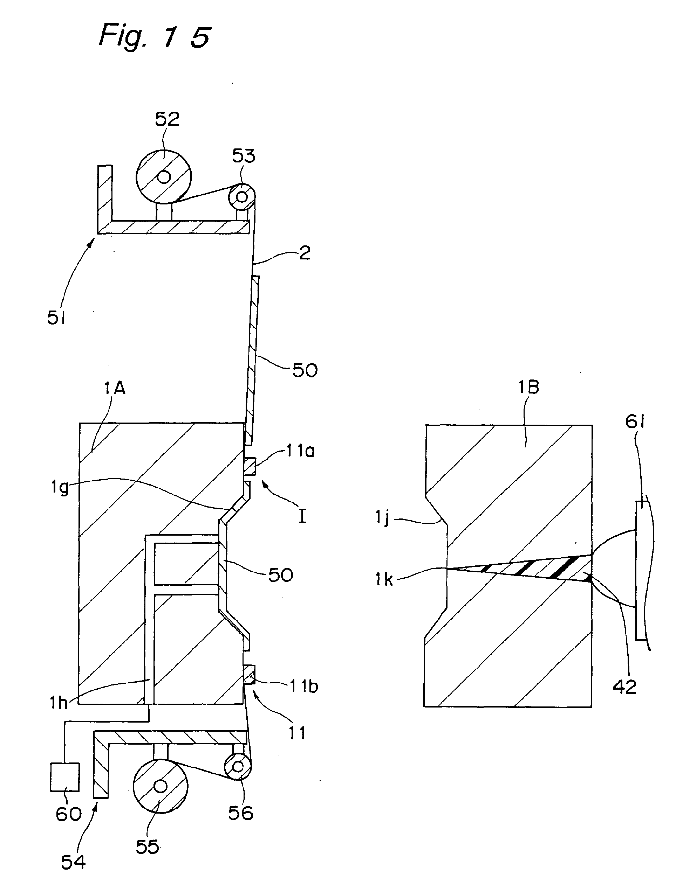

As shown in Fig. 1, a frame clamp 11 is constituted by a lateral frame member 11a on the upper side having a square shape in its cross section, a lateral frame member 11b on the lower side having a square shape in its cross section, which is arranged approximately in parallel with the lateral frame member 11a on the upper side, and two longitudinal frame members 11c, each having a square shape in its cross section, which connect the lateral frame member 11a on the upper side and the lateral frame member 11b on the lower side with each other. Two extrusion rods 32, which penetrate a metal mold (a metal mold on the movable side or a metal mold on the fixed side) 1 to which the frame clamp 11 is attached, are connected to the lateral frame member 11a on the upper side, and two extrusion rods 31, which penetrate the metal mold (the metal mold on the movable side or the metal mold on the fixed side) 1 to which the frame clamp 11 is attached, are also connected to the lateral frame member 11b on the lower side; thus, by advancing or retreating movements in an axial direction of the four extrusion rods 31 and 32 in total, the frame clamp 11 is allowed to move between a transfer film fixing position (see position I in Fig. 15) at which the frame clamp 11 is made to come close to the metal mold cavity face of the metal mold 1 so that the transfer film is sandwiched between the frame clamp 11 and the metal mold cavity face and a transfer film releasing position (see position II in Fig. 14) at which the frame clamp 11 is made to depart from the metal mold cavity face so that the transfer film is released. Here, an inclinable portion 14 of the frame clamp 11 is formed by the lateral frame member 11a on the upper side and the two longitudinal frame members 11c, and a hinge portion 21, which is one example of the inclinable mechanism, is formed at each of the connecting portions between the lower ends of the two longitudinal frame members 11c and the lateral frame member 11b on the lower side. With this arrangement, the inclinable portion 14 is allowed to incline with respect to the extrusion rods 31 and 32.

The hinge portion 21 has the following structure. Cut-out sections 11d are respectively formed in the lateral frame member 11b on the lower side at positions to which the lower ends of the two longitudinal frame members 11c are coupled. Moreover, hinge shafts 21a, which extend in the axial direction of the lateral frame member 11b on the lower side, penetrate the lower end of each of the longitudinal frame members 11c inserted into the cut-out sections 11d, so that the two ends of each hinge shaft 21a are rotatably supported by both sides of each cut-out section 11d of the lateral frame member 11b on the lower side; thus, the lower end of each of the two longitudinal frame members 11c is coupled to the lateral frame member 11b on the lower side so as to rotate around the hinge shaft 21a with respect to the lateral frame member 11b at an angle within a predetermined range. The hinge portion 21 is constructed in this manner, and the inclinable portion 14 is allowed to incline with respect to the extrusion rods 31 and 32.

Moreover, the two extrusion rods 32 on the upper side are respectively coupled to the lateral frame members 11a on the upper side by engaging portions 22 so as to be releasably engaged therewith. As shown in Fig. 2 in detail, each of the engaging portions 22 is formed to have a concave section 11e on the face opposing to the metal mold of the lateral frame member 11a on the upper side, with a through hole 11f that penetrates in the thickness direction formed in each concave section 11e.

Each of the extrusion rods 32 is constituted by a column-shaped base end portion 32a that movably penetrates the metal mold 1, a column-shaped intermediate portion 32b having an outer diameter smaller than the base end portion 32a, a column-shaped tip portion 32c having an outer diameter smaller than the intermediate portion 32b, and a disc-shaped engaging protrusion 32d that has an outer diameter larger than that of the tip portion 32c and is fixed to the tip of the tip portion 32c as a head portion. Consequently, the inner diameter of the through hole 11f of the concave section 11e of the lateral frame member 11a on the upper side is made larger than the outer diameters of the tip portion 32c of the extrusion rod 32 and the engaging protrusion 32d, made slightly larger than the outer diameter of the intermediate portion 32b, and also made smaller than the outer diameter of the base end portion 32a so as to allow the tip portion 32c of the extrusion rod 32 and the engaging protrusion 32 to penetrate the through hole 11f. As a result, the tip portion 32c of the extrusion rod 32 and the engaging extrusion 32d are allowed to freely penetrate the through hole 11f of the concave section 11e of the lateral frame member 11a on the upper side, and the intermediate portion 32b of the extrusion rod 32 can be inserted to the through hole 11f of the concave section 11e of the lateral frame member 11a on the upper side; thus, when the intermediate portion 32b of the extrusion rod 32 is inserted through the through hole 11f, the base end portion 32a of the extrusion rod 32 is made in contact with the peripheral portion of the through hole 11f to serve as a stopper, so that the base end portion 32a is not inserted into the through hole 11f.

A plate-shaped lock plate (one example of the lock member) 23 having an inverted U shape, which is one example of the fixing member, can be inserted downward into the concave section 11e of the lateral frame member 11a on the upper side, and the lock plate 23 is provided with an engaging groove 23a that extends upward from the lower end thereof. The width of the engaging groove 23a is made slightly wider than the outer diameter of the tip portion 32c of the extrusion rod 32, and also made smaller than the outer diameter of the engaging protrusion 32d. Thus, after the tip portion 32c and the engaging protrusion 32d of the extrusion rod 32 are made to penetrate the through hole 11f of the concave section 11e of the lateral frame member 11a on the upper side, with the intermediate portion 32b of the extrusion rod 32 inserted into the through hole 11f of the concave section 11e of the lateral frame member 11a on the upper side, each of the lock plates 23 is inserted between the concave section 11e of the lateral frame member 11a on the upper side and the engaging protrusion 32d of the extrusion rod 32, downward from above, so that the tip portion 32c of the extrusion rod 32, positioned inside the concave section 11e of the lateral frame member 11a on the upper side, is inserted into the engaging groove 23a of the lock plate 23; thus, the lock plate 23 engages with the engaging protrusion 32d of the extrusion rod 32 to stop moving in the axial direction of the extrusion rod 32, and the engaging protrusion 32d of the extrusion rod 32 is prevented from coming off the through hole 11f of the concave section 11e of the lateral frame member 11a on the upper side in the axial direction of the extrusion rod 32, thereby brought into an engaged state (locked state). In other words, with the base end portion 32a of the extrusion rod 32 contacted with the peripheral portion of the through hole 11f of the concave section 11e of the lateral frame member 11a on the upper side, the lock plate 23 is engaged with the engaging protrusion 32d of the extrusion rod 32, so that with the lateral frame member 11a on the upper side is locked by the tip portion of the extrusion rod 32, and the lateral frame member 11a on the upper side is allowed to move integrally with the two extrusion rods 32.

In the case where each of the lock plates 23 is drawn out upward from the gap between the concave section 11e of the lateral frame member 11a on the upper side and the engaging protrusion 32d of the extrusion rod 32, the tip portion 32c and the engaging protrusion 32d of the extrusion rod 32 can be drawn out respectively, through the through hole 11f of the concave section 11e of the lateral frame member 11a on the upper side. As a result, the lateral frame member 11a on the upper side is brought into a state separable from the two extrusion rods 32, and as will be described later, when cleaning the metal mold, the inclinable portion 14, constituted by the lateral frame member 11a on the upper side, the two longitudinal frame members 11c, and the like, can be rotated about the hinge shaft 21a to a position at which it is inclined relative to the extrusion rods 31 and 32.

The shape of the above-mentioned lock plate 23 is not limited to the plate member (see Fig. 2) having approximately an inverted U shape with the engaging groove 23a, and for example, another structure may be used in which a pin member (another example of the lock member) 23A, formed by an insertion portion 23c having approximately a column shape and a head portion 23b that is secured to the tip of the insertion portion 23c and has an outer diameter larger than the insertion portion 23c (see Fig. 4), may be adopted.

More specifically, as shown in Figs. 4 and 5, the structure is formed in such a manner that each of the two ends of the lateral frame member 11a on the upper side, shown in Fig. 1 or the like, is connectably separated from the main body of the lateral frame member 11a on the upper side, and always secured to the tip of each of the two extrusion rods 32A. More specifically, an engaging protrusion 11g, which protrudes outward laterally and has a width smaller than that of the main body, is formed on each of the two ends of the main body of the lateral frame member 11a on the upper side, and each engaging protrusion 11g has a penetrating portion 11h formed longitudinally. In the same manner as the base end portion 32a of the extrusion rod 32 shown in Fig. 1 and the like, each extrusion rod 32A has a column-shaped base end portion 32h and an engaging plate 32g that is secured to the tip of the base end portion 32h and has an outer diameter larger than that of the base end portion 32h. Moreover, the metal mold 1 is provided with a pair of fixing assist portions 16, each formed into a rectangular member, through which the base end portion 32h of each of the extrusion rods 32A is inserted, and which are secured to the tip portions of the extrusion rods 32A while preventing from coming off by the engaging plate 32g. The end portion of each of the fixing assist portions 16 is provided with a concave section 16g to which the engaging protrusion 11g of the lateral frame member 11a on the upper side can be fitted, and the upper and lower ends forming the concave section 16g are provided respectively with through holes 16h that are allowed to communicate with the through hole 11h of the engaging protrusion 11g of the lateral frame member 11a on the upper side. Each engaging protrusion 11g of the lateral frame member 11a on the upper side and the concave section 16g of each fixing assist portion 16 form an engaging portion 22A.

Therefore, in a state where each of the engaging protrusions 11g of the lateral frame member 11a on the upper side is fitted to each of the concave sections 16g of the fixing assist portions 16, the through hole 11h of each engaging protrusion 11g communicates with the through holes 16h of the upper and lower ends of the concave section 16g, and by inserting the insertion portion 23c of the lock pin 23A into the through hole 16h of the end on the upper side of the concave section 16g of the fixing assist portion 16 downward so that the insertion portion 23c of the lock pin 23A is inserted into the through holes 16h of the upper and lower concave sections 16g and the through hole 11h of the engaging protrusion 11g, respectively, with the fixing assist portion 16 and the engaging protrusion 11g of the lateral frame member 11a on the upper side coupled to each other; thus, the lateral frame member 11a on the upper side is releasably secured to the tip portion of the extrusion rod 32A. Since the head portion 23b of the lock pin 23A has a diameter larger than that of the through holes 16h of the upper and lower portions of the concave section 16g, it is made in contact with the peripheral portion of the through holes 16h of the concave section 16g to prevent the lock pin 23A from coming off downward.

In order to release the fixed state between the lateral frame member 11a on the upper side and the extrusion rod 32A, the insertion portion 23c of the lock pin 23A is simply drawn out from the through holes 16h of the concave section 16g and the through hole 11h of the engaging protrusion 11g.

Therefore, in the case where the lock plate 23 is formed into a plate having approximately an inverted U shape with the engaging groove 23a as shown in Fig. 1, the lock plate 23 is engaged with the engaging protrusion 32d of the tip of the extrusion rod 32 as shown in Fig. 1, so that the inclinable portion 14 and the extrusion rod 32 are secured to each other. In contrast, in another embodiment as shown in Fig. 4, where the lock pin 23A is prepared as a pin member formed by approximately a column-shaped insertion portion 23c with the head portion 23b attached thereto, the insertion portion 23c of the lock pin 23A is inserted through the through holes 11h and 16h of the inclinable portion 14 and the fixing assist portion 16, with the inclinable portion 14 and the fixing assist portion 16 engaged with each other, whereby the inclinable portion 14 and the fixing assist portion 16 are coupled to and secured with each other (see Fig. 4).

The subject member used for securing the inclinable portion 14 is not limited to the extrusion rod 32 and the fixing assist portion 16 as described above, and in the case where there are two or more inclinable portions 14, another structure may be used in which the inclinable portions 14C are secured with each other (see Fig. 11).

More specifically, another embodiment shown in Fig. 11 has the following structure. While in Fig. 4, the hinge portion 21 is provided only on the coupling portion between the lower end of each of the two longitudinal frame members 11c and the lateral frame member 11b on the lower side, in the another embodiment in Fig. 11, a hinge portion 21 is also provided on a coupling portion between the other end of each of the two longitudinal frame members 11c and the lateral frame member 11a on the upper side, and the resulting structure is formed such that the frame clamp 11 of Fig. 4 is rotated by 90 degrees in parallel with the parting face 1a of the metal mold 1 and disposed laterally with respect to the metal mold 1. Moreover, each of the two longitudinal frame members 11c is divided at the center portion into two portions (each longitudinal frame member 11c is divided at the center portion into a right-side lateral frame member 11r and a left-side lateral frame member 11s) so that a engaging portion 22B that is similar to the structure formed by the engaging protrusion 11g of the main body of the lateral frame member 11a on the upper side and the concave section 16g of the fixing assist portion 16 of Fig. 4, that is, a fitting engagement structure between the engaging protrusion 11j and the concave section 11k, is formed, and by inserting lock pins (another example of the lock member) 23B that are similar to previously described lock pins 23A into the respective through holes 11m and 11n, with the engaging protrusion 11j and the concave section 11k engaged with each other, the lateral frame member 11s on the left side having the engaging protrusion 11j and the lateral frame member 11r on the right side having the concave section 11k are releasably coupled to each other. By drawing the lock pins 23B out from the respective through holes 11m and 11n, the lateral frame member 11s on the left side having the engaging protrusion 11j and the lateral frame member 11r on the right side having the concave section 11k can be released from the coupled state.

In the metal mold 1 that uses the frame clamp 11 having the above-described structure shown in Fig. 2 or 4, at the time of injection molding (resin molding), the inclinable portion 14 is secured onto the two extrusion rods 32 (see Fig. 2) or the two fixing assist portions 16 (see Fig. 4) by the lock plate 23 or the lock pin 23A that is one example of the fixing member, so that the inclinable portion 14 is in such a state that it cannot be inclined.

On the other hand, in the case where, upon occurrence of dents, the metal mold cavity face is cleaned, the lock plate 23 or the lock pin 23A that is one example of the fixing member is removed from the frame clamp 11, whereby the fixed state of the inclinable portion 14 by the lock plate 23 is released (see Figs. 2 and 4), and the inclinable portion 14, which is now in a semi-fixed state, can be placed at a inclined position which is made apart from the metal mold cavity face or the metal mold parting face 1a with the hinge shaft 21a of the hinge portion 21 serving as a rotation axis (see Figs. 3 and 5). In this state, the transfer film 2 can be shifted from a predetermined molding position on the metal mold cavity face in the length direction of the transfer film 2, without being interfered by the inclinable portion 14. After the metal mold cleaning process, the transfer film 2 is returned to the predetermined molding position, then the inclinable portion 14 is returned to the extrusion rod 32 or the fixing assist portion 16, and by attaching the lock plate 23 or the lock pin 23A thereto, it is returned to the state at the time of molding.

The inclinable portion 14 is a portion that is arranged at least one portion of the frame clamp 11, and can be inclined with respect to the extrusion rods 32 (in other words, the metal mold cavity face or the metal mold parting face 1a) at the time of cleaning the metal mold.

The shape of the inclinable portion 14 is not limited to the frame shape having approximately an inverted U shape (see Figs. 3 and 5), and may be formed into approximately a rectangular frame shape (see Fig. 6). With this shape, when the transfer film 2 is made in tight-contact with the metal mold cavity face through vacuum suction, it is possible to ensure air-tightness when the transfer film 2 is pressed onto the parting face 1a on the periphery of the metal mold cavity face by the frame clamp 11 and also to facilitate processing of members to a great extent. Moreover, the shape of the inclinable portion 14 may be approximately an L shape or approximately a rod shape, or may be prepared as a member having a bent portion in the middle of these shape (for example, approximately a hexagonal shape) or as a member of which one or the entire portion is curved. Alternatively, the inclinable portion 14 may be branched into two or more members 14C (see Fig. 11) .

In Fig. 6, since the inclinable portion 14 has approximately a rectangular frame shape, fixing assist portions 16C fixed to the tips of the extrusion rods 31 are placed on both sides of the lateral frame member 11b on the lower side, with the fixing assist portions 16c rotatably coupled to the ends of the lateral frame member 11b on the lower side through hinge shafts 21a, so that hinge portions 21 are formed; thus, the inclinable portion 14 is allowed to rotate around the fixing assist portions 16C on both sides by these hinge portions 21.

The above-described inclinable mechanism is installed at a coupling portion between the inclinable portion of the frame clamp and each extrusion rod, and serves as a mechanism used for moving (inclining) the inclinable portion with respect to each extrusion rod, when it is brought into a semi-fixed state. For example, the inclinable mechanism may be formed by the hinge portion 21. More specifically, this mechanism is installed at the coupling portion between the inclinable portion 14 of the frame clamp 11 and each extrusion rod 31, and serves as a mechanism used for moving (inclining) the inclinable portion 14 with respect to each extrusion rod 31 at the time of cleaning the metal mold, when it is brought into a semi-fixed state (when one portion of the inclinable portion 14 is coupled to the metal mold side). By inclining the inclinable portion 14 brought into the semi-fixed state so as to depart from the metal mold cavity face or the metal mold parting face 1a by using the inclinable mechanism, when carrying out a deposit removing process for removing deposits that cause dents during molding, it becomes possible to prevent the frame clamp 11 from interfering with the deposit removing process. With respect to the inclinable mechanism, as described in the above embodiment, the hinge mechanism (hinge portion) that is easy to be processed can be used. In the case where the hinge mechanism is used, the inclinable portion 14 can be rotated about the hinge shaft 21a.

The inclinable mechanism is not limited to the hinge mechanism, and for example, an engaging portion formed by a convex portion and a concave section, or a universal joint may be used. In the case where the engaging portion formed by the convex portion and the concave section is used, the mechanism can not only rotate the inclinable portion 14 about the engaging portion constituted by, for example, a column-shaped convex portion formed on one of members and a round concave section formed in the other member so as to be fitted thereto in a manner as to relatively rotate thereon, but also can move the inclinable portion 14, with the column-shaped convex portion formed in one of members shifted along the groove-shaped concave section formed in the other member. In the case where the universal joint is used, it is possible to have degree of freedom for the direction in which the inclinable portion 14 is moved, for example, when the inclinable portion 14 is approximately a rod shape.

The position at which the inclinable mechanism is installed is not limited to the lower side of the metal mold 1. For example, the position of each hinge portion 21 is set on the side opposing to the side on which an operator operates the metal mold 1, so that the opening and closing direction of the frame clamp 11 may be set laterally. The set direction in which the inclinable portion 14 is inclined is not limited to the direction orthogonal to the metal mold parting face 1a, and any direction in parallel with the metal mold parting face 1a may be set as long as it is a direction in which the inclinable portion 14 departs from the metal mold cavity face.

With respect to the means for securing the inclinable portion 14 during molding, a system for securing the inclinable mechanism, or a system in which a fixing member is used separately may be used.

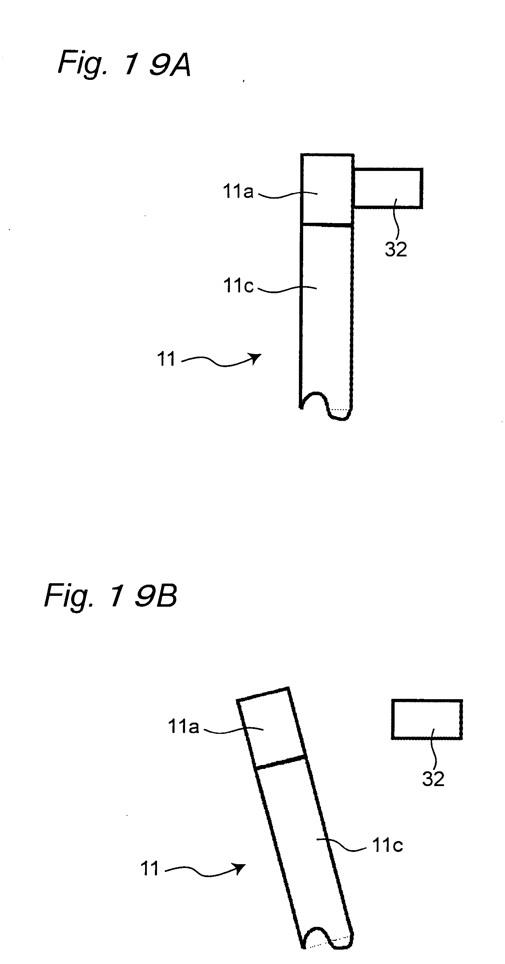

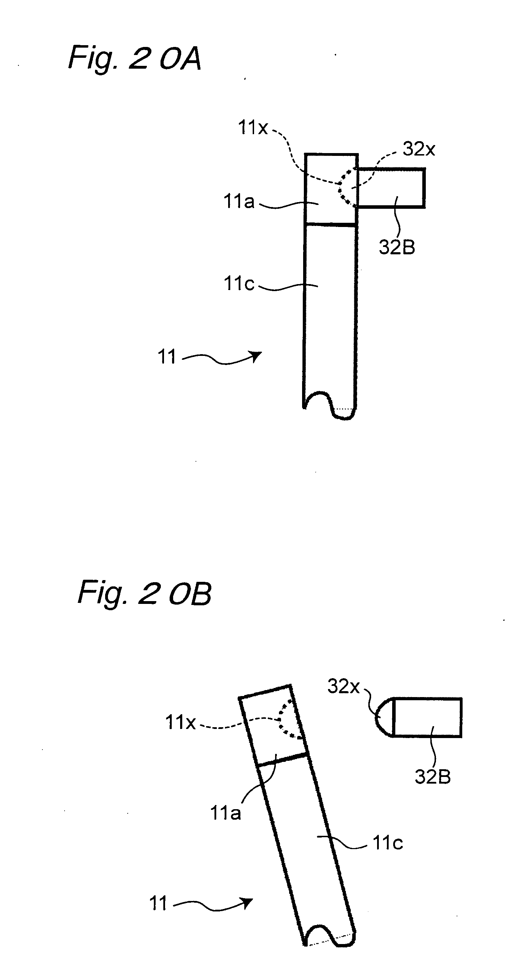

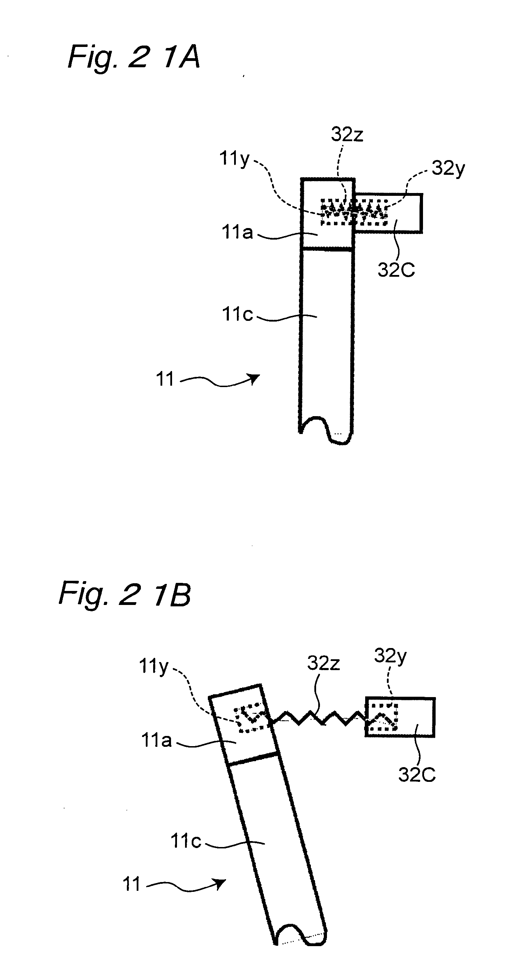

As one specific example of the system for securing the inclinable mechanism, a system in which, by rotating a knob 33 of the hinge portion 21B by 90 degrees, switching is performed between a semi-fixed state and a fixed state (see Figs. 7 to 10) is proposed. As shown in Figs. 7 and 8, the inclinable portion 14B corresponds to the entire frame clamp 11, and the hinge portion 21B that is one example of the inclinable mechanism is attached in the vicinity of the tip portion of each extrusion rod 31B. In this case, the extrusion rod 32 is not secured to the inclinable portion 14, and the inclinable portion 14 may be separated at the time of cleaning the metal mold. As one example in which the extrusion rod 32 is not secured to the inclinable portion 14, it may be so configured that, as shown in Fig. 19A, during molding, only the face opposite the metal mold of the lateral frame member 11a on the upper side of the inclinable portion 14 contacts the tip of each extrusion rod 32, and as shown in Fig. 19B, during cleaning, when the inclinable portion 14 is inclined, the metal mold-opposite-face of the lateral frame member 11a on the upper side of the inclinable portion 14 departs from the tip of each extrusion rod 32. As another example, it may be so configured that, as shown in Fig. 20A, during molding, the spherical face concave section 11x of the metal mold-opposite-face of the lateral frame member 11a on the upper side of the inclinable portion 14 is inserted into a semi-spherical face portion 32x on the tip of the extrusion rod 32, and as shown in Fig. 20B, during cleaning, when the inclinable portion 14 is inclined, the spherical face concave section 11x of the metal mold-opposite-face of the lateral frame member 11a on the upper side of the inclinable portion 14 departs from the semi-spherical face portion 32x on the tip of the extrusion rod 32. Moreover, as still another example, it may be so configured that, as shown in Fig. 21A, at the time of molding, a spring 32z is provided between the concave section 32y on the tip of the extrusion rod 32 and the concave section 11y on the metal mold-opposite-face of the lateral frame member 11a on the upper side of the inclinable portion 14, and as shown in Fig. 21B, during cleaning, when the inclinable portion 14 is inclined, the spring 32z is expanded between the concave section 32y on the tip of the extrusion rod 32 and the concave section 11y on the metal mold-opposite-face of the lateral frame member 11a on the upper side of the inclinable portion 14, so that the metal mold-opposite-face of the lateral frame member 11a on the upper side of the inclinable portion 14 departs from the tip of the extrusion rod 32.

In Figs. 7 to 10, each of the main body portions 31f of the two extrusion rods 31B is insertion-supported on the metal mold 1 in a freely rotating manner, and to the tip portion of each extrusion rod 31B, a hinge portion 21B, an inclinable portion coupling unit 31e, which is bendably coupled to the main body portion 31f through the hinge portion 21B and also coupled to the inclinable portion 14, and a knob 33 fixed to the tip of the inclinable portion coupling unit 31e, are coupled. To the hinge portion 21B, a hinge plate portion 31c on the tip of the main body portion 31f and a hinge plate portion 31d on the end of the inclinable portion coupling unit 31e are coupled through a hinge shaft 21b in a freely bendable manner. Therefore, in the case where the bendable faces of the respective hinge portions 21B are laterally maintained as shown in Fig. 8, since the extruding amount of the extrusion rod 31B is fixed, the hinge portion 21B cannot be moved to be bent laterally, with the result that the inclinable portion 14 is in a fixed state. On the other hand, as shown in Fig. 9 (non-bendable state of the hinge portion 21B) and Fig. 10 (bendable state of the hinge portion 21B), when the bendable faces of the respective hinge portions 21B are set in a vertical direction by rotating the knob 33 coupled to the main body portion 31f of the extrusion rod 31B by 90 degrees from the state shown in Fig. 8, the hinge portions 21B can be moved so as to be bent in the vertical direction, with the result that the inclinable portion 14 is brought into a semi-fixed state, and the inclinable portion 14 is allowed to depart from the metal mold cavity face or the metal mold parting face 1a. In this system, since basically no fixing member is required separately, it is possible to save the costs and time required for processing the fixing members.

With respect to the fixing member to be used in the system requiring a fixing member separately, a member which allows the inclinable portion 14 to be easily fixed and released quickly by hand with no need to use a tool such as a wrench and a spanner, is preferably used. More specifically, a rotation-type fixing member or a knob screw, as well as the above-mentioned lock plate 23, the lock pins 23A and 23B, or the like that can be formed through simple machining processes, may be used.

As shown in Fig. 1, the transfer film 2 to be used in the metal mold for simultaneous injection-molding and decorating in accordance with the present embodiment of the invention has patterns 50 that are provided in the longitudinal direction of the transfer film 2 at predetermined intervals. The transfer film 2 is provided with a base film 135 and a decorating layer 132 formed on the base film 135, and the decorating layer 132 is designed to have a peeling protective layer 134 and a pattern ink layer 131a forming the patterns 50 that is placed on the peeling protective layer 134 (see Fig. 13). Moreover, a bonding layer 133 is formed on the pattern ink layer 131a as well as on portions of the peeling protective layer 134 on which no pattern ink layer 131a is formed, and at the time of simultaneous molding and double-side decorating process, the bonding layer 133 contacts molten resin to be bonded to the molten resin, so that the pattern ink layer 131a is separated from the base film 135 together with the peeling protective layer 134; thus, the decorating layer 132 is transferred onto a resin molded product.

Referring to Figs. 14 to 18, described in the following will be processes in which by using the metal mold 1 as one portion of the metal mold for simultaneous injection-molding and decorating, an injection molding is carried out using the transfer film 2. In Figs. 14 to 18, one of the metal molds is denoted by 1A and the other metal mold is denoted by 1B, and either one of the metal mold 1A and the metal mold 1B is a movable-side metal mold and the other metal mold is a fixed-side metal mold, so that the movable-side metal mold and the fixed-side metal mold form injection molding metal molds. Moreover, in Figs. 14 to 18, 1j and 1g represent cavity faces, 1k represents an injection port of a molten resin 42 connected to the injection unit 61 of an injection molding machine, 1h represents a suction passage connected to a suction device 60, 51 represents a transfer film supplying device, 52 represents a supply roller, 53 represents a feeding roller, 54 represents a transfer film winding device, 55 represents a winding roller, 56 represents a feeding roller, and 41 represents a resin molded product.

At the time of simultaneous molding and transferring process, the transfer film 2 in which the decorating layer 132 constituted by the peeling protective layer 134, the pattern ink layer 131a, the bonding layer 133, and the like, are formed on the base film 135 is used, and first, by having the extrusion rods 31 and 32 that penetrate the metal mold 1A advance toward the metal mold 1B-side, the frame clamp 11 is shifted to a transfer film releasing position II from a transfer film fixing position I to lift the frame clamp 11 from the parting face 1a of the metal mold 1A, and the transfer film winding device 54 is driven to rotate the winding roller 55 so that the transfer film 2 is wound up onto the winding roller 55 by the feeding roller 56; thus, the supply roller 52 of the transfer film supplying device 51 is allowed to rotate so that the transfer film 2 is rewound from the supply roller 52, and the transfer film 2 is supplied to the cavity 1g by the feeding roller 53. Consequently, the above-mentioned patterns 50 of the transfer film 2 to be transferred are made face to face with the cavity 1g of the metal mold 1 (for example, the metal mold 1A in Figs. 14 to 18), as shown in Fig. 14.

Next, by having the extrusion rods 31 and 32 that penetrate the metal mold 1A retreat reversely from the metal mold 1B-side, the frame clamp 11 is shifted to the transfer film fixing position I from the transfer film releasing position II so that the transfer film 2 is sandwiched between the frame clamp 11 and the parting face 1a of the metal mold 1A. Then, the transfer film 2 is adsorped onto the face of the cavity 1g through the suction passage 1h by driving the suction device 60 (see Fig. 15).

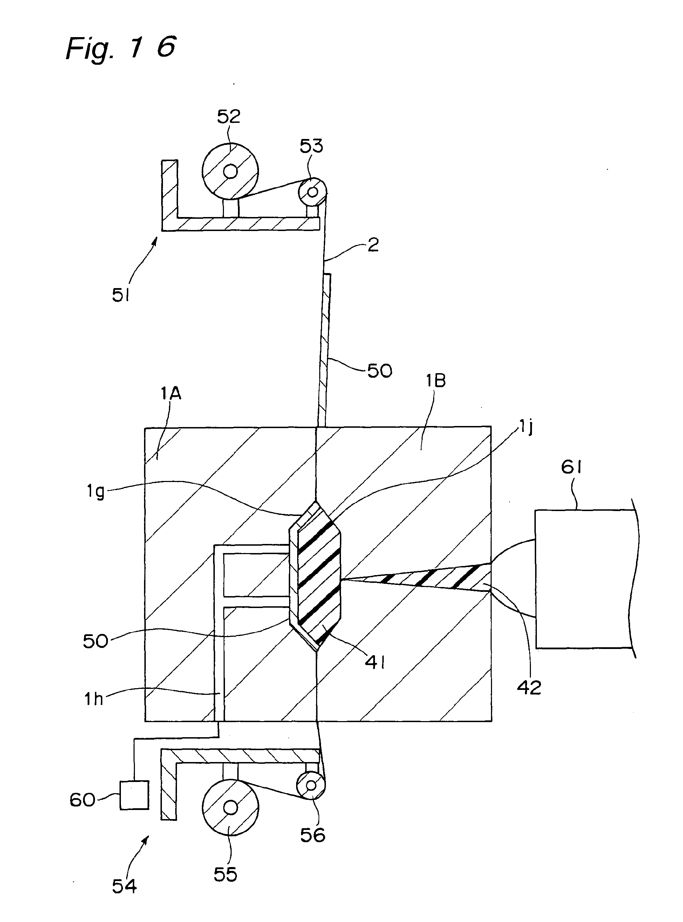

Next, the metal mold 1A and the metal mold 1B are clamped, and the transfer film 2 is sandwiched within the injection molding metal mold formed by the metal mold 1A and the metal mold 1B, and a molten resin 42 is injected from the injection port 1k to fill the cavities 1j and 1g of the molding metal molds 1A and 1B with the molten resin 42. Next, the molten resin 42 is cooled together with the molding metal molds 1A and 1B, so that a resin molded product 41 is obtained with the patterns 50 of the transfer film 2 simultaneously bonded to the surface of the resin molded product 41 (see Fig. 16).

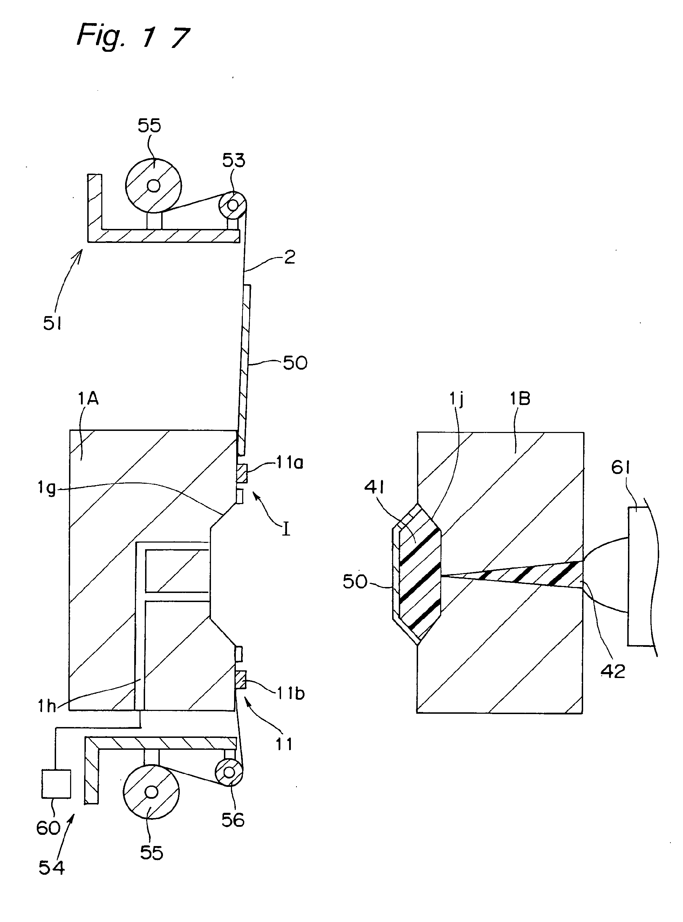

Thereafter, the metal mold 1A and the metal mold 1B are separated from each other, with the base film 135 of the transfer film 2 peeled from the resin molded product 41, whereby a decorating process is carried out by transferring the decorating layer 132 onto the surface of the resin molded product 41 (see Fig. 17).

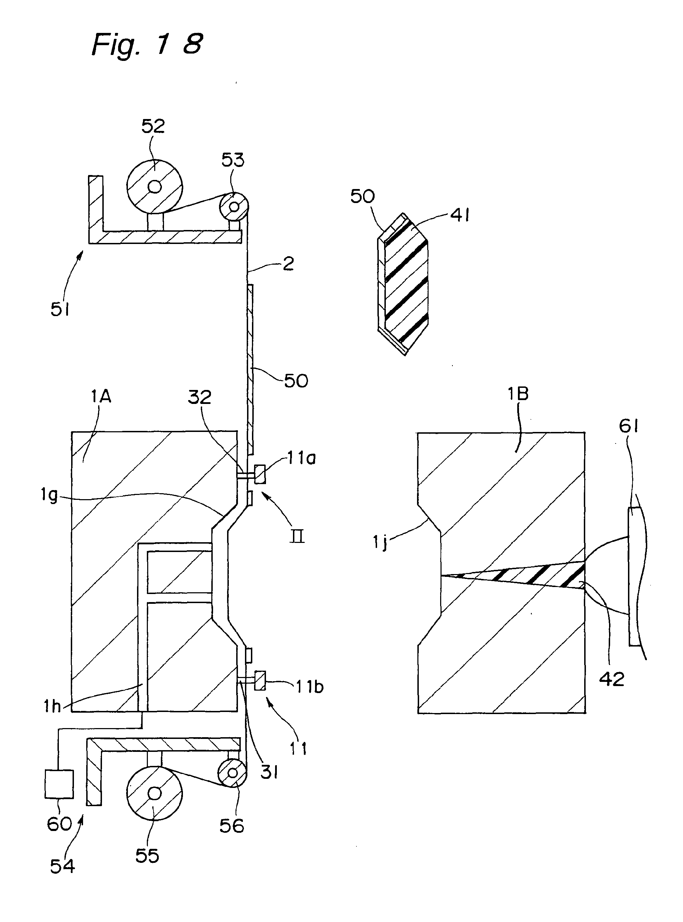

Lastly, the resin molded product 41 adhered to and left on one of the metal molds 1B is taken out of the metal mold 1B (see Fig. 18).

Thereafter, by having the extrusion rods 31 and 32 penetrating the metal mold 1A advance toward the metal mold 1B-side, the frame clamp 11 is shifted from the transfer film fixing position I (see Fig. 17) to the transfer film releasing position II (see Fig. 18) to be lifted from the parting face 1a of the metal mold 1A, and the winding roller 55 is rotated so that, as shown in Fig. 14, the patterns 50 to be transferred next in the transfer film 2 are made face to face with the cavity 1g of the metal mold 1A. In this manner, with the patterns 50 to be transferred next in the transfer film 2 made face to face with the cavity 1g of the metal mold 1A, the transfer film 2 is sucked onto the face of the cavity 1g through the suction passage 1h by driving the suction device 60 (see Fig. 15). Thereafter, the processes of Figs. 16 to 18 are carried out.

In this manner, by repeating the processes of Figs. 14 to 18, injection molding processes can be carried out continuously.

With respect to the base film 135 of the transfer film 2, those films normally used as base films of decorating films, such as a single layer film made of a material selected from the group including a polycarbonate-based resin, a polyamide-based resin, a polyimide-based resin, a polyester-based resin, an acrylic resin, an olefin-based resin, a urethane-based resin, and an acrylonitrile butadiene-styrene-based resin, or a laminated film or a copolymer film made from two or more kinds of resins selected from the above-mentioned group, may be used.

The thickness of the base film 135 is preferably set to 5 to 500 µm. The film having a thickness of less than 5 µm is poor in handling when placed on the metal mold, resulting in an unstable molding process, and the film having a thickness exceeding 500 µm is too high in rigidity, and cannot be appropriately used in the molding process.

The peeling protective layer 134 is formed on the entire surface or a partial surface of the base film 135 or a mold-releasing layer. The peeling protective layer 134 is a layer which, upon peeling the base film 135 after the simultaneous molding and decorating process, is separated from the base film 135 or the mold-releasing layer to be the outermost face of the simultaneously injection-molded and decorated product.

Here, in the case where the peeling protective layer 134 causes an interlayer peeling, the face that has been interlayer-peeled becomes the outermost face. With respect to the material of the peeling protective layer 134, for example, an acrylic resin, a pyroxylin-based resin, a polyurethane-based resin, a chlorinated rubber-based resin, a vinyl chloride-vinyl acetate copolymer-based resin, a polyamide-based resin, a polyester-based resin, an epoxy-based resin, a polycarbonate-based resin, an olefin-based resin, or acrylonitrile butadiene styrene resin may be used. In the case where hardness is required for the peeling protective layer 134, a photo-curable resin such as an ultraviolet curable resin, a radiation curable resin such as an electron radiation curable resin, or a thermosetting resin may be selectively used.

The thickness of the peeling protective layer 134 is preferably set in a range of from 0.5 to 50 µm. A film thickness of less than 0.5 µm causes a problem in which a sufficient adhesive property is not obtained, and a thickness exceeding 50 µm causes a problem in which it does not dry soon after printing. With respect to the peeling protective layer 134, either a colored layer or an uncolored layer may be used. With respect to the forming method of the peeling protective layer 134, a coating method such as a gravure coating method, a roll coating method, or a comma coating method, or a printing method such as a gravure printing method or a screen printing method, may be used.

Normally, the pattern ink layer 131a is formed on the peeling protective layer 134 as a printed layer. With respect to the material of the printed layer, a colorant ink in which a resin such as an acrylic resin, a pyroxilin-based resin, a polyurethane-based resin, a chlorinated rubber-based resin, a vinyl chloride-vinyl acetate copolymer-based resin, a polyamide-based resin, a polyester-based resin, or an epoxy-based resin is used as a binder and a pigment or dye of an appropriate color is added as a colorant is preferably used. With respect to the formation method of the printed layer, a normal printing method such as an offset printing method, a gravure printing method, or a screen printing method can be used. In particular, when conducting a multi-color printing process or a gradation printing process, the offset printing method or the gravure printing method is appropriately used. In the case of mono-color printing, a coating method such as a gravure coating method, a roll coating method, or a comma coating method can also be used. The printed layer may be formed on the entire surface, or may be partially formed, depending on the pattern to be prepared.

Moreover, the pattern ink layer 131a may be made of a metal thin-film layer or a combined layer of a printed layer and a metal thin-film layer. The metal thin-film layer, which is used as the pattern ink layer 131a for providing metal luster, is formed by a method such as a vacuum vapor-deposition method, a sputtering method, an ion-plating method, or a metal plating method. According to a desired metal luster color, metal such as aluminum, nickel, gold, platinum, chromium, iron, copper, tin, indium, silver, titanium, lead, or zinc, or alloys or compounds of these, may be used.

The thickness of the pattern ink layer 131a is preferably set in the range of from 0.5 to 50 µm. A film thickness of less than 0.5 µm causes a problem in which a sufficient designing property is not obtained, and a thickness exceeding 50 µm causes a problem in which it becomes difficult to dry the film after the printing. In the case where the pattern ink layer 131a is prepared as a metal thin film layer, the film thickness is preferably set in the range of from 50 to 1200 µm. A film thickness of the metal thin film layer of less than 50 µm causes a problem in which sufficient metal luster is not obtained, and a thickness exceeding 1200 µm causes a problem in which cracks tend to occur.

The bonding layer 133 is used for bonding the above-mentioned respective layers onto the surface of the simultaneously injection-molded and decorated product. The bonding layer 133 is formed at each of portions required to be bonded. In other words, when the entire surface is required to be bonded, the bonding layer 133 is formed over the entire surface of the pattern ink layer 131a. When only partial portions are required to be bonded, the bonding layer 133 is formed partially on the surface of the pattern ink layer 131a. With respect to the bonding layer 133, a heat-sensitive or pressure-sensitive resin suitable for the material forming the simultaneously injection-molded and decorated product is appropriately used. For example, in the case where the material of the simultaneously injection-molded and decorated product is a polyacrylic resin, a polyacrylic resin is preferably used. In the case where the material of the simultaneously injection-molded and decorated product is a polyphenylene oxide copolymer polystyrene-based copolymer resin, a polycarbonate-based resin, a styrene-based resin, or a polystyrene-based blended resin, a polyacrylic resin, a polystyrene-based resin, or a polyamide-based resin, which has an affinity with those resins, may be used. Moreover, in the case where the material of the simultaneously injection-molded and decorated product is polypropylene resin, chlorinated polyolefin resin, chlorinated ethene-vinyl acetate copolymer resin, cyclized rubber, or coumarone-indene resin may be used.

The thickness of the bonding layer 133 is preferably set in the range of from 0.5 to 50 µm. A film thickness of less than 0.5 µm causes a problem in which a sufficient adhesive property is not obtained, and a thickness exceeding 50 µm causes a problem in which it is difficult to be dried after the printing. With respect to the forming method of the bonding layer 133, a coating method such as a gravure coating method, a roll coating method, or a comma coating method, or a printing method such as a gravure printing method or a screen printing method, may be used.

The structure of the decorating layer 132 is not limited to the structure of the above-mentioned aspect, and for example, in the case where a material that is good in adhering to the simultaneously injection-molded and decorated product is used as the material of the pattern ink layer 131a, the bonding layer 133 may be omitted.

The molding resin for the simultaneously injection-molded and decorated product may be any of a transparent resin, a semi-transparent resin, and an opaque resin. Moreover, the molding resin for the simultaneously injection-molded and decorated product may be a colored resin or a non-colored resin. With respect to the molding resin for the simultaneously injection-molded and decorated product, a thermoplastic resin such as an acrylic resin, a polycarbonate-based resin, a styrene-based resin, a polyamide-based resin, a Noryl(registered trademark)-based resin, a polyester-based resin, an olefin-based resin, a urethane-based resin, or an acrylonitrile butadiene styrene-based resin, may be used. Moreover, a general engineering resin such as a polyphenylene oxide-polystyrene-based resin, a polycarbonate-based resin, a polyacetal-based resin, a polyacrylic resin, polycarbonate modified polyphenylene ether resin, polyethylene terephthalate resin, polybutylene terephthalate resin, or ultrahigh molecular weight polyethylene resin; or a super engineering resin such as polysulfone resin, a polyphenylene sulfide-based resin, a polyphenylene oxide-based resin, polyallylate resin, polyether imide resin, polyimide resin, liquid crystalline polyester resin, or a polyallyl-based high temperature resin, may be used.

### WORKING EXAMPLE 1.

By using the frame clamp 11 of the metal mold in accordance with the embodiment of the present invention shown in Figs. 1 to 3, the cleaning operability on the metal mold cavity face was checked at the time of occurrence of dents.

Upon occurrence of dents, the continuous molding process was suspended. The extrusion rods 31 and 32 were made advanced toward the metal mold 1 so that, after the frame clamp 11 was shifted from the transfer film fixing position I to the transfer film releasing position II, each of the lock plates 23 that locked the extrusion rods 32 and the inclinable portion 14, was released.

Next, the inclinable portion 14 was inclined around the two hinge portions 21 serving as rotation axes so as to depart from the metal mold cavity face or the metal mold parting face 1a. In this state, the end of the transfer film 12 was easily raised to see the metal mold cavity face, and deposits on the metal mold cavity face could be seen.

After the deposits on the metal mold cavity face were removed, the inclinable portion 14 was made returned to the metal mold cavity face or to the metal mold parting face 1a through reverse processes from the aforementioned processes, whereupon the respective extrusion rods 32 and the inclinable portion 14 were engaged with each other by the respective lock plates 23 to integrally couple each lock plate 23 and the frame clamp 11 with each other, thereafter the extrusion rods 31 and 32 were made retreated from the metal mold 1 so that the frame clamp 11 was shifted from the transfer film releasing position II to the transfer film fixing position I, thereby resuming the continuous molding process.

With the metal mold using the frame clamp of this working example 1, the time required for the cleaning operation was about 15 seconds.

As a comparative example, a conventional frame clamp shown in Fig. 12 was used, and the cleaning operability on the metal mold cavity face was checked at the time of occurrence of dents.

Upon occurrence of dents, the continuous molding process was suspended. Screws at four positions that secure the frame clamp 111 to the extrusion rods 112 were removed, and the frame clamp 111 was then detached from the extrusion rods 112. In this state, the end of the transfer film 2 was easily raised to see the metal mold cavity face, and deposits on the metal mold cavity face could be seen.

After the deposits on the metal mold cavity face were removed, the frame clamp 111 was fitted to the extrusion rods 112 through reverse processes from the aforementioned processes, and secured with the screws, thereby resuming the continuous molding process.

With the metal mold using the frame clamp 111 of the comparative example, the time required for the cleaning operation was nearly 1 minute.

### WORKING EXAMPLE 2

By using the frame clamp 11 of the metal mold in accordance with the embodiment of the present invention shown in Figs. 4 and 5, the cleaning operability on the metal mold cavity face was checked at the time of occurrence of dents.

Upon occurrence of dents, the continuous molding process was suspended. The extrusion rods 31 and 32A were made advanced so that the frame clamp 11 was shifted from the transfer film fixing position I to the transfer film releasing position II, and each of the lock pins 23A that locked the extrusion rods 32 and the engaging-side fixing assist portions 16 was released. Then, the inclinable portion 14 was inclined around the two hinge portions 21 serving as rotation axes so as to depart from the metal mold cavity face or the metal mold parting face 1a. In this state, the end of the transfer film 12 was easily raised to see the metal mold cavity face, and deposits on the metal mold cavity face could be seen.

After the deposits on the metal mold cavity face were removed, the inclinable portion 14 was made returned to the metal mold cavity face or to the metal mold parting face 1a through reverse processes from the above-mentioned processes, whereupon the respective extrusion rods 32 and the engaging-side fixing assist portion 16 were engaged with each other by the respective lock pins 23A to integrally couple each lock pin 23A and the frame clamp 11 with each other, thereafter the extrusion rods 31 and 32A were made retreated from the metal mold 1 so that the frame clamp 11 was shifted from the transfer film releasing position II to the transfer film fixing position I, thereby resuming the continuous molding process.

With the metal mold using the frame clamp 11 of this working example 2 also, the time required for the cleaning operation was about 15 seconds.

The metal mold 1 using the frame clamp 11 has been explained as the movable-side metal mold or the fixed-side metal mold; however, the above-mentioned frame clamp 11 is not limited to this arrangement, and it may be applied to both the metal molds of the movable-side metal mold and the fixed-side metal mold.

By properly combining the arbitrary embodiments of the aforementioned various embodiments, the effects possessed by the embodiments can be produced.

### Industrial Applicability

The metal mold for simultaneous injection-molding and decorating of the present invention is provided with the frame clamp that does not interfere with a deposit removing process for removing deposits from the metal mold cavity face, so that it becomes possible to efficiently remove dents while injection molding is not performed.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A metal mold for simultaneous injection-molding and decorating, comprising:
a movable-side metal mold and a fixed-side metal mold, wherein
at least one metal mold (1, 1A, 1B) of the movable-side metal mold and the fixed-side metal mold comprises:
a frame clamp (11) capable of sandwiching a transfer film (12) between a metal mold cavity face and the frame clamp;
an extrusion rod (31, 31B, 32, 32A) capable of shifting the frame clamp between a transfer film fixing position at which the frame clamp comes close to the metal mold cavity face to sandwich the transfer film between the frame clamp and the metal mold cavity face and a transfer film releasing position at which the frame clamp departs from the metal mold cavity face to release the transfer film;
an inclinable portion (14, 14B, 14C) that is arranged at least one portion of the frame clamp, capable of inclining relative to the extrusion rod; and
an inclinable mechanism (21, 21B) for coupling the inclinable portion of the frame clamp with the extrusion rod such that the inclinable portion can be inclined relative to the extrusion rod when molding is not performed.

2. The metal mold for simultaneous injection-molding and decorating according to claim 1, wherein the inclinable mechanism is a hinge portion (21, 21B).

3. The metal mold for simultaneous injection-molding and decorating according to claim 1 or 2, wherein when molding is performed, the inclinable mechanism is fixed such that the inclinable portion is made uninclinable relative to the extrusion rod.

4. The metal mold for simultaneous injection-molding and decorating according to claim 1 or 2, further comprising a fixing member (23, 23A, 23B) for fixing the inclinable portion to at least one of the frame clamp and the extrusion rod so as not to incline relative to the extrusion rod,
wherein when molding is performed, the inclinable portion is fixed by the fixing member such that the inclinable portion does not incline relative to the extrusion rod.

5. The metal mold for simultaneous injection-molding and decorating according to claim 3, further comprising a fixing member (23, 23A, 23B) for fixing the inclinable portion to at least one of the frame clamp and the extrusion rod so as not to incline relative to the extrusion rod,
wherein when molding is performed, the inclinable portion is fixed by the fixing member such that the inclinable portion does not incline relative to the extrusion rod.

6. The metal mold for simultaneous injection-molding and decorating according to claim 4, wherein a coupled portion between the inclinable portion and the extrusion rod is coupled by an engaging portion (22, 22A, 22B) that is releasable from an engaged state, and the fixing member is a lock member (23, 23A, 23B) for engaging with the engaging portion.

7. The metal mold for simultaneous injection-molding and decorating according to claim 5, wherein a coupled portion between the inclinable portion and the extrusion rod is coupled by an engaging portion (22, 22A, 22B) that is releasable from an engaged state, and the fixing member is a lock member (23, 23A, 23B) for engaging with the engaging portion.

8. The metal mold for simultaneous injection-molding and decorating according to claim 1 or 2, wherein the inclinable portion has a shape either of approximately an inverted U-shaped frame shape and approximately a rectangular frame shape.

9. The metal mold for simultaneous injection-molding and decorating according to claim 3, wherein the inclinable portion has a shape either of approximately an inverted U-shaped frame shape and approximately a rectangular frame shape.

10. The metal mold for simultaneous injection-molding and decorating according to claim 4, wherein the inclinable portion has a shape either of approximately an inverted U-shaped frame shape and approximately a rectangular frame shape.

11. The metal mold for simultaneous injection-molding and decorating according to claim 5, wherein the inclinable portion has a shape either of approximately an inverted U-shaped frame shape and approximately a rectangular frame shape.

12. The metal mold for simultaneous injection-molding and decorating according to claim 6, wherein the inclinable portion has a shape either of approximately an inverted U-shaped frame shape and approximately a rectangular frame shape.

13. The metal mold for simultaneous injection-molding and decorating according to claim 7, wherein the inclinable portion has a shape either of approximately an inverted U-shaped frame shape and approximately a rectangular frame shape.
